# EUROPEAN PATENT APPLICATION

(11) **EP 4 830 510 A1**
(43) Date of publication of application: **28.10.2026**
(21) Application number: 24906944.4
(22) Date of filing: 01.11.2024
(51) Int. Cl.: A01G 7/00, G01N 21/3563

(54) **QUALITY MEASUREMENT SYSTEM FOR FRUIT AND VEGETABLE, METHOD FOR SWITCHING CALIBRATION CURVE, AND COMPUTER PROGRAM**

(30) Priority: 21.12.2023 JP 2023215773
(71) Applicant: KUBOTA CORPORATION, Osaka-shi, Osaka 530-0011 (JP)
(72) Inventor: TANAKA, Satoshi, Sakai-shi, Osaka 590-0908 (JP); OGUMA, Takashi, Sakai-shi, Osaka 590-0908 (JP); MORIMOTO, Susumu, Sakai-shi, Osaka 590-0908 (JP)
(74) Representative: Cabinet Beau de Loménie
(86) International application number: PCT/JP2024/039116
(87) International publication number: WO 2025/134556

(57) **Abstract**

A system according to one aspect of the present disclosure is a quality measurement system including a measurement device for quality of a farm product and a server, in which the server includes a storage device that stores a data set including a calibration curve for each planting position of the farm product, a communication device that receives position information of the measurement device, and a control device that executes processing of determining the calibration curve to be used for measurement of the quality based on the received position information of the measurement device.

## Description

### TECHNICAL FIELD

The present disclosure relates to a quality measurement system for a farm product, a method for switching a calibration curve, and a computer program. The present application claims priority based on Japanese Patent Application No. 2023-215773 filed on December 21, 2023, the entire contents of which are incorporated herein by reference.

### BACKGROUND ART

Patent Literature 1 describes a technique for switching a calibration equation model according to the degree of maturation of a sample specimen in an analysis method for quantifying components of the sample specimen by irradiating the sample specimen such as grapes with light of a predetermined wavelength and measuring a spectrum.
Patent Literature 2 describes a device that creates an estimation model for estimating a sugar content corresponding to a farm product and measures a sugar content in a measuring method for irradiating the farm product with light from a light source, receiving reflected light of the light, and measuring the sugar content of the farm product.

### CITATION LIST

### PATENT LITERATURE

PATENT LITERATURE 1: WO 2009/038206 A
PATENT LITERATURE 2: Japanese Laid-Open Patent Publication No. 2022-95598

### SUMMARY OF THE INVENTION

A system according to one aspect of the present disclosure is a quality measurement system including a measurement device for quality of a farm product and a server, in which the server includes a storage device that stores a data set including a calibration curve for each planting position of the farm product, a communication device that receives position information of the measurement device, and a control device that executes processing of determining the calibration curve to be used for measurement of the quality based on the received position information of the measurement device.

Embodiments of the present disclosure can be implemented by a device, a system, a method, an integrated circuit, a computer program, a computer-readable non-transitory recording medium, or any combination thereof.

The properties of the recording medium may be either volatile or nonvolatile. The device may include a plurality of individual devices. In the case of a configuration including a plurality of individual devices, the devices may be arranged in one housing, or may be arranged separately in two or more separate housings.

### BRIEF DESCRIPTION OF DRAWINGS

[FIG. 1] FIG. 1 is a network configuration diagram of an entire system.
[FIG. 2] FIG. 2 is a block diagram illustrating an example of a measurement device.
[FIG. 3] FIG. 3 is a cross-sectional view of a measurement head.
[FIG. 4] FIG. 4 is a block diagram illustrating a configuration example of an information providing server.
[FIG. 5] FIG. 5 is an explanatory diagram illustrating an example of calibration curve determination processing in a first embodiment.
[FIG. 6] FIG. 6 is a sequence diagram illustrating an example of operations in the first embodiment.
[FIG. 7] FIG. 7 is an explanatory diagram illustrating an example of calibration curve determination processing in a second embodiment.
[FIG. 8] FIG. 8 is a sequence diagram illustrating an example of operations in the second embodiment.
[FIG. 9] FIG. 9 is an explanatory diagram illustrating an example of calibration curve determination processing and quality determination processing in a third embodiment.
[FIG. 10] FIG. 10 is a sequence diagram illustrating an example of operations in the third embodiment.
[FIG. 11] FIG. 11 is an explanatory diagram illustrating an example of calibration curve determination processing and quality determination processing in a fourth embodiment.
[FIG. 12] FIG. 12 is a sequence diagram illustrating an example of operations in the fourth embodiment.

### DETAILED DESCRIPTION

### <Problems to be Solved by Present Disclosure>

For example, in a farm product such as grapes, it is known that quality such as sugar content varies depending on the state of the soil at a planting position, the time slot in which the farm product is harvested, and the like.

However, in the above patent literature, it is not assumed that the calibration curve is switched for each planting position or a harvest time slot. Therefore, when the quality is measured by uniformly applying the same calibration curve to a plurality of farm products with different planting positions and harvest time slots, the measurement accuracy deteriorates and the quality of the farm products may not be appropriately measured.

In view of the above-described conventional problems, an object of the present disclosure is to enable appropriate measurement of quality of a farm product.

### <Effects of Present Disclosure>

According to the present disclosure, the quality of a farm product can be appropriately measured.

### <Outline of Embodiment of Present Disclosure>

Hereinafter, an outline of embodiments of the present disclosure will be listed and described.
(1) A system according to one aspect of the present embodiment is a quality measurement system including a measurement device for quality of a farm product and a server, in which the server includes a storage device that stores a data set including a calibration curve for each planting position of the farm product, a communication device that receives position information of the measurement device, and a control device that executes processing of determining the calibration curve to be used for measurement of the quality based on the received position information of the measurement device.

According to the quality evaluation system for a farm product of the present embodiment, the control device of the server executes the processing of determining the calibration curve to be used for measurement of the quality of the farm product based on the position information of the measurement device, and thus, it is possible to switch an appropriate calibration curve for each planting position of the farm product. Therefore, the quality of a farm product can be appropriately measured.

(2) In the quality measurement system of the present embodiment, the planting position may be information associated with field region information in which the farm product is grown.

This is because, for example, it is considered that the quality of a farm product such as a grape can change in units of fields in which the farm product is grown. Note that the planting position may be associated with the position of the tree. However, since the management of the calibration curve for each tree requires a large amount of data, it is preferable to manage the planting position on a field basis in consideration of convenience of data management.

(3) In the quality measurement system for the farm product of the present embodiment, the data set may further include the calibration curve of the planting position for each time slot of a day, the communication device may further receive a time of measurement of the quality by the measurement device, and the control device may determine the calibration curve to be used for measurement of the quality based on the received position information of the measurement device and the time slot including the received measurement time.

With the quality measurement system for the farm product of the present embodiment, since the control device of the server executes the processing of determining the calibration curve to be used for measurement of the quality of the farm product based on the position information of the measurement device and the time slot of a day including the actual measurement time, the calibration curve can be switched to an appropriate calibration curve for each time slot at the position where the farm product is planted. Therefore, the quality of a farm product can be appropriately measured.

(4) In the quality measurement system for the farm product of the present embodiment, the data set may include the calibration curve for a first time slot that is a nighttime time slot at the planting position, and the calibration curve for a second time slot that is a time slot other than the first time slot at the planting position.

With the quality measurement system for the farm product of the present embodiment, since the data set includes the calibration curve for the first time slot and the calibration curve for the second time slot, different calibration curves are adopted between a case where the measurement is performed in the first time slot at night and a case where the measurement is performed in the second time slot other than night.

Therefore, an appropriate calibration curve can be adopted depending on whether the measurement time is at night or at non-night, and the quality of a farm product can be appropriately measured. For example, in the case where the farm product is grapes as a raw material of wine, since the quality varies depending on the time slot of harvest, it is possible to detect an accurate component by adopting a calibration curve suitable for the time slot in which the quality can be most improved. That is, by adopting a calibration curve suitable for night harvest (nighttime harvest), it is possible to accurately grasp components at the time of harvest at night.

(5) In the quality measurement system for the farm product of the present embodiment, the communication device may further receive a light level of reflected light from the farm product acquired by the measurement device, and the control device may further execute processing of determining the quality of the farm product based on the received light level and the determined calibration curve.

With the quality measurement system for the farm product of the present embodiment, the control device of the server determines the quality of the farm product based on the light level received from the measurement device and the calibration curve determined by the control device itself.

In this case, since it is not necessary for the measurement device to determine the quality based on the calibration curve, it is not necessary to transmit the determined calibration curve to the measurement device. Therefore, the processing load on the measurement device can be reduced.

(6) In the quality measurement system for the farm product of the present embodiment, the quality may be at least one of sugar content, acidity, or pH of the farm product. In this case, at least one of sugar content, acidity, or pH of the farm product can be appropriately measured.

(7) In the price estimation device of the present embodiment, the farm product may be grapes. In this case, the quality of the grapes can be appropriately measured.

(8) A method according to one aspect of the present embodiment is a method for switching a calibration curve executed in the quality measurement system for the farm product according to any one of (1) to (7) described above.

Therefore, the method for switching of the present embodiment has effects similar to those of the quality measurement system for the farm product according to any one of (1) to (7) described above.

(9) A computer program according to one aspect of the present embodiment is a computer program for causing a computer to function as a server of the quality measurement system for the farm product according to any one of (1) to (7) described above.

Therefore, the computer program of the present embodiment has effects similar to those of the quality measurement system for the farm product according to any one of (1) to (7) described above.

### <Details of Embodiment of Present Disclosure>

### [Definition of Terms]

Definitions of terms mainly used in the present specification are as follows.
"Farm product": It refers to a crop such as a vegetable or a fruit. Examples of the farm product include grapes, oranges, apples, strawberries, watermelons, and tomatoes.
"Quality": It is the quality of a farm product. Examples of the quality include the sugar content, acidity, pH, and the degree of components such as polyphenol of a farm product, and the degree of internal damage of a farm product.
"Calibration curve": A graph representing a relationship between measurement data obtained by non-destructive measurement for a farm product and quality of the farm product, or an approximate expression approximating the graph.
[Null]: It is a type of expression representing a state in which desired data is not included in a database or the like.

### [First Embodiment]

Hereinafter, embodiments of the present disclosure will be described in detail with reference to the drawings. Note that at least some of the embodiments described below may be arbitrarily combined.

### [Overall Configuration of System]

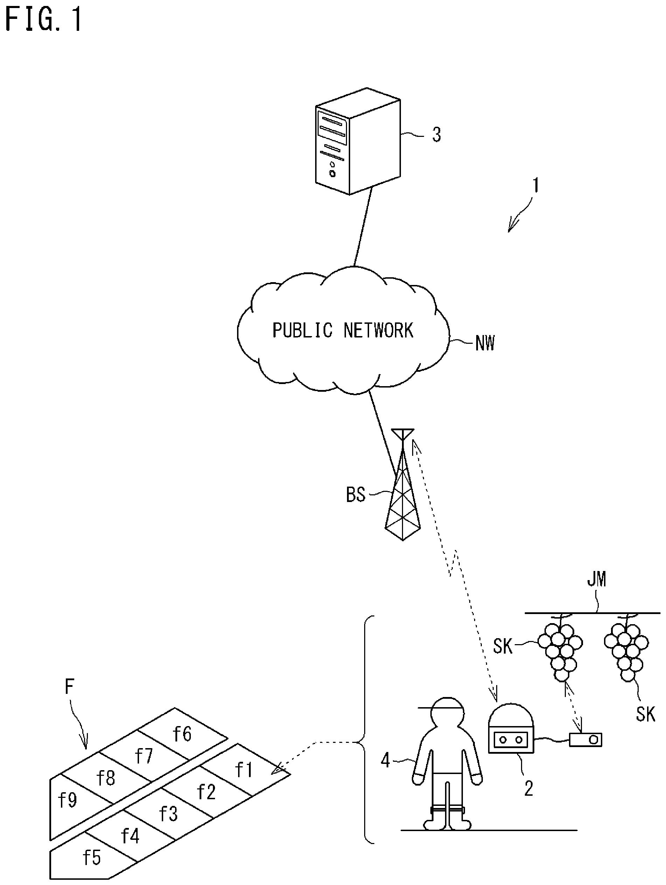

FIG. 1 is a network configuration diagram of an entire system.

In FIG. 1, a farm product quality measurement system 1 has a function of measuring quality of a farm product cultivated in a field F. The field F includes, for example, divided fields f1 to f9. In each field, for example, various farm products such as grapes, oranges, apples, strawberries, watermelons, and tomatoes are planted.

Even in the same grape, various varieties such as Merlot and Chardonnay are grown. Therefore, it may be difficult to determine what kind is planted at a glance.

The quality measurement system 1 measures the quality of the fruit of the grape fruiting on the tree JM. More specifically, the quality measurement system 1 obtains the quality of a farm product, which is an object to be measured, by analysis using near-infrared light. The quality of a farm product is a value based on various components of the farm product. The quality includes sugar content, acidity, pH, polyphenol, and the like.

The quality measurement system 1 includes a measurement device 2 and an information providing server 3 (hereinafter, it may be abbreviated as a "server").

The measurement device 2 is a device that measures the quality of a farm product, and may be configured to have a size and a shape that allow the worker 4 to easily carry the measurement device 2 to the field F.

The worker 4 carries the measurement device 2 to the field F, and measures, for example, the quality of a farm product, for example, a grape, in the field f1 using the measurement device 2.

The measurement device 2 has a function of acquiring spectrum information in a near-infrared region included in reflected light and transmitted light of a farm product. The spectrum information in the near-infrared region includes information indicating the quality of a farm product. Therefore, the measurement device 2 outputs the quality of the farm product as a measurement result based on the spectrum information in the near-infrared region. The measurement device 2 will be described in detail later. Note that the spectrum information refers to information indicating a relationship between a wavelength and light intensity in a wavelength region from a first wavelength to a second wavelength longer than the first wavelength.

The measurement device 2 and the information providing server 3 are communicably connected to each other via a network NW such as the Internet.

The measurement device 2 has, for example, a communication function by a mobile communication system. The measurement device 2 is connected to the network NW via the radio base station BS of the mobile communication system.

The information providing server 3 has a function of providing calibration curve data for obtaining the quality of a farm product based on the output of the measurement device 2. The calibration curve is, for example, a graph for deriving the quality (sugar content, acidity, and the like) of a farm product from the level of light of a predetermined wavelength included in spectrum information in the near-infrared region, but may be an equation approximating the graph.

### [Measurement Device]

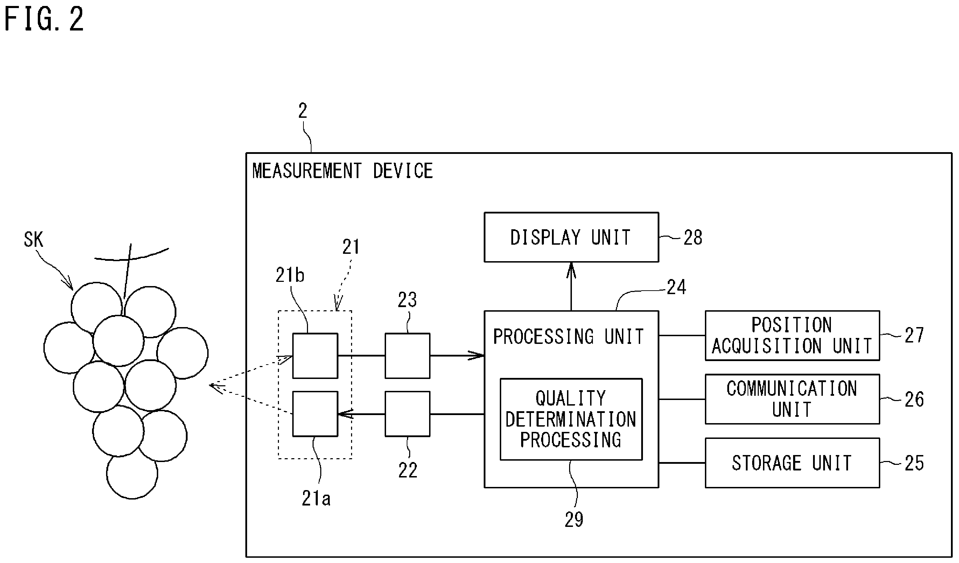

FIG. 2 is a block diagram illustrating an example of the measurement device 2.

The measurement device 2 is a device for measuring the quality of a farm product that communicates with the information providing server 3.

The measurement device 2 includes a measurement head 21 that projects light of a predetermined wavelength to a farm product and receives reflected light, a processing unit 24 that determines a measurement value of quality based on a light reception level and a calibration curve, and a communication unit 26 that transmits position information of the present device to the server 3 and receives the calibration curve corresponding to a planting position of the farm product from the server 3.

As described above, the measurement device 2 is a device that measures the quality of the farm product SK, and outputs the quality of the farm product as a result based on the spectrum information in the near-infrared region. Specifically, the measurement device 2 irradiates the farm product SK with light, receives reflected light transmitted through the farm product SK, and outputs the quality of the farm product as a result on the basis of a light level (light reception level) of a predetermined wavelength included in spectrum information of the received light.

As illustrated in FIG. 2, the measurement device 2 includes the measurement head 21, a light source 22, a spectrometer 23, the processing unit 24, a storage unit 25, the communication unit 26, a position acquisition unit 27, and a display unit 28.

The measurement head 21 includes a light projecting unit 21a and a light receiving unit 21b.

The light projecting unit 21a and the light source 22 are connected by an optical fiber.

The light source 22 is, for example, a halogen lamp. Light from the light source 22 is guided to the light projecting unit 21a of the measurement head 21 through an optical fiber. The light projecting unit 21a irradiates the farm product SK, which is an object to be measured, with the light from the light source 22.

The light receiving unit 21b receives reflected light transmitted through and reflected by the farm product SK. The reflected light received by the light receiving unit 21b is generated when the farm product SK is irradiated with the light from the light projecting unit 21a.

The light receiving unit 21b and the spectrometer 23 are connected by an optical fiber. The reflected light received by the light receiving unit 21b is guided to the spectrometer 23 through the optical fiber.

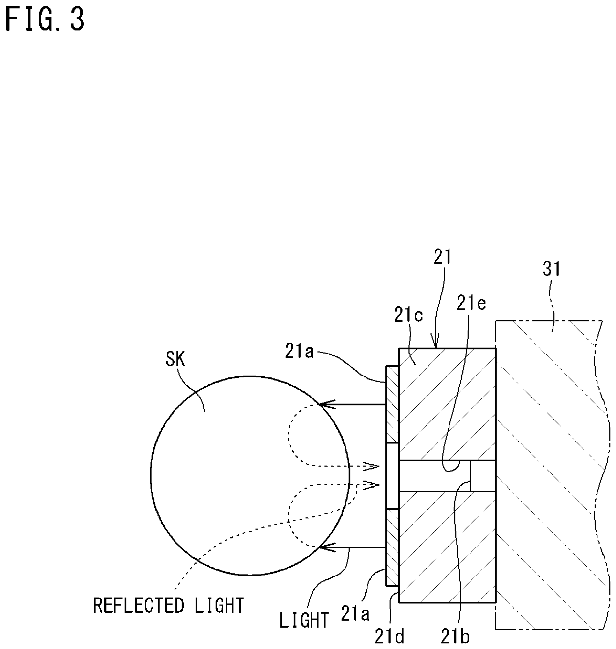

FIG. 3 is a cross-sectional view of the measurement head 21.

As illustrated in FIG. 3, the measurement head 21 includes a head body 21c. The head body 21c is an annular member made of resin, for example. The head body 21c is configured to be held by a worker and directed to a farm product, and is provided at a tip of a bar-shaped handle 31, for example.

The light projecting unit 21a is provided on the annular distal end surface 21d of the head body 21c. The light projecting unit 21a has an annular shape. When the light from the light source 22 is applied to the light projecting unit 21a, the light is scattered inside and uniformly emitted from the light projecting unit 21a. The light receiving unit 21b is provided in the hole 21e of the head body 21c. The light receiving unit 21b receives the reflected light having passed through the hole 21e.

In the measurement of the farm product SK by the measurement device 2, it is necessary to irradiate the farm product SK with light by the light projecting unit 21a, and thus it is necessary to bring the measurement head 21 close to the farm product SK.

When the measurement device 2 measures the farm product SK, the measurement head 21 is disposed at a measurement position as illustrated in FIG. 3.

When the measurement head 21 is disposed at the measurement position close to the farm product SK, the farm product SK is irradiated with the light from the light projecting unit 21a. The light irradiated with the farm product SK is transmitted through the farm product SK as indicated by an arrow in FIG. 3, and reflected light is generated. The reflected light passes through the hole 21e and is received by the light receiving unit 21b.

In FIG. 2, the spectrometer 23 has a function of dispersing the reflected light and a light receiving function of converting the reflected light into a signal corresponding to a light reception level.

When the reflected light received by the light receiving unit 21b is given, the spectrometer 23 outputs a light reception level of a predetermined wavelength obtained by dispersing the reflected light. The function of dispersing the reflected light is provided by, for example, a diffraction grating, a Fabry-Perot interferometer, or the like. The light reception level output from the spectrometer 23 is output to the processing unit 24.

The processing unit 24 is, for example, various processors adapted to control of a computer, such as a central processing unit (CPU), a graphics processing unit (GPU), a digital signal processor (DSP), and a field programmable gate array (FPGA).

The processing unit 24 implements various processing functions of the processing unit 24 by executing a computer program stored in a computer-readable non-transitory recording medium such as the storage unit 25 described later. The processing unit 24 has a function of controlling the light source 22 and the spectrometer 23 based on a control command or the like given from the storage unit 25. In addition, the processing unit 24 is connected to an input device (not illustrated) that receives an operation input, and the processing unit 24 also has a function of controlling the light source 22 and the spectrometer 23 based on the operation input of the worker.

The processing unit 24 further has a function of executing quality determination processing 29. The quality determination processing 29 is processing of determining the quality of a farm product based on the light reception level of the measurement head 21 and the calibration curve. Details will be described later.

The storage unit 25 is, for example, a flash memory, a solid state drive (SSD), a read only memory (ROM), a random access memory (RAM), or the like. The storage unit 25 stores a computer program to be executed by the processing unit 24 and necessary information.

The communication unit 26 is a communication interface capable of communicating with an external device via a network NW such as the Internet. Communication with the external device may be wireless communication or wired communication.

The position acquisition unit 27 acquires longitude and latitude on the ground of the present device. The position acquisition unit 27 acquires longitude and latitude by, for example, a global positioning system (GPS) or an ultra-wide band (UWB).

The display unit 28 performs predetermined display under the control of the processing unit 24. The display unit 28 is, for example, a liquid crystal display. The display unit 28 may be configured as a liquid crystal display with a touch panel together with the input unit.

### [Information Providing Server]

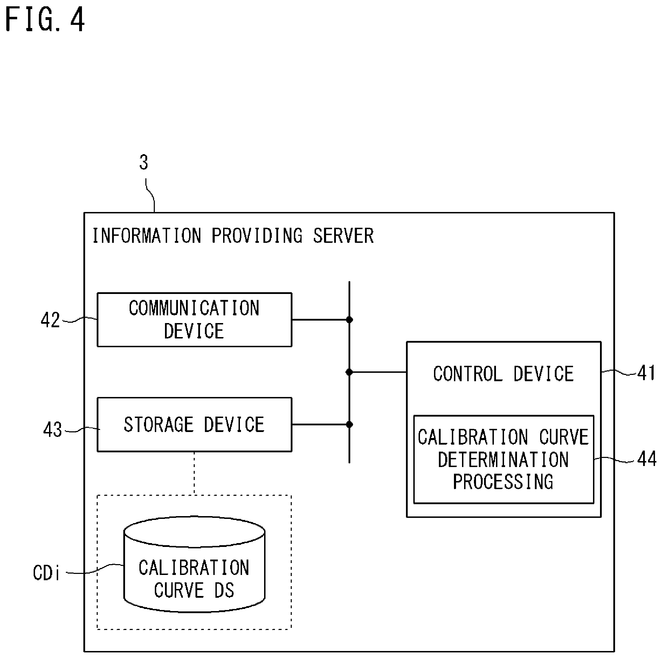

FIG. 4 is a block diagram illustrating a configuration example of the information providing server 3.

As illustrated in FIG. 4, the information providing server 3 is a type of information processing device including a control device 41, a communication device 42, and a storage device 43.

The control device 41 is, for example, various processors adapted to control of a computer, such as a CPU, a GPU, a DSP, and an FPGA. The control device 41 has a function of executing calibration curve determination processing 44. The calibration curve determination processing 44 is processing of obtaining a planting position based on the position information and obtaining the calibration curve corresponding to the obtained planting position. Details will be described later.

The communication device 42 is a communication interface capable of communicating with an external device via a network NW such as the Internet. Communication with the external device may be wireless communication or wired communication.

The storage device 43 is, for example, a flash memory, a hard disk, an SSD, a ROM, a RAM, or the like. The storage device 43 stores a computer program to be executed by the control device 41 and necessary information. The control device 41 implements various processing functions of the control device 41 by executing a computer program stored in a computer-readable non-transitory recording medium such as the storage device 43. The storage device 43 further stores a calibration curve data set CDi. Table 1 is an example of a calibration curve data set (DS).

**[Table 1]**

| Calibration curve data set | | |
|---|---|---|
| planting position | Calibration curve | Field region information |
| 1 | (i₁₀. q₁₀), (i_{11,} q₁₁), (i₁₂, q₁₂),... | (x₁₀, y₁₀), (x_{11,} y₁₁). (x₁₂, y₁₂),... |
| 2 | (i₂₀. q₂₀), (i₂₁, q₂₁), (i₂₂, q₂₂),... | (x₂₀, y20), (x₂₁, y21). (x₂₂, y₂₂),.... |
| 3 | (i₃₀. q₃₀), (i₃₁, q₃₁), (i₃₂, q₃₂),... | (x₃₀, y₃₀), (x₃₁, y₃₁). (x₃₂, y₃₂),... |
| 4 | (i₄₀. q₄₀), (i41, q41), (i42, q42),... | (x₄₀, y₄₀), (x₄₁, Y41). (x₄₂, Y42),... |

The calibration curve data set CDi is a data set in which calibration curves are collected to determine the quality of a farm product. The calibration curve is, for example, data of a graph, and is data for deriving the quality (sugar content, acidity, and the like) of a farm product from the light reception level. As illustrated in Table 1, the calibration curve (graph) is expressed as a plurality of points, for example, expressed as (i₁₀, q₁₀), (i₁₁, q₁₁), (i₁₂, q₁₂),.... (i₁₀, q₁₀) means that the quality (sugar content or the like) at light reception level i₁₀ is q₁₀. The calibration curve is not limited to the graph, and may be, for example, an approximate expression. When the approximate expression is expressed by a₀ + a₁x + a₂x² + a₃x³..., the calibration curve is expressed by coefficients a₀, a₁, a₂, a₃... instead of (i₁₀, q₁₀), (i₁₁, q₁₁), (i₁₂, q₁₂), (i₁₃, q₁₃),... as data, and the coefficients are stored in the storage device 43.

In the calibration curve data set CDi, the calibration curve is associated with the planting position and the field region information.

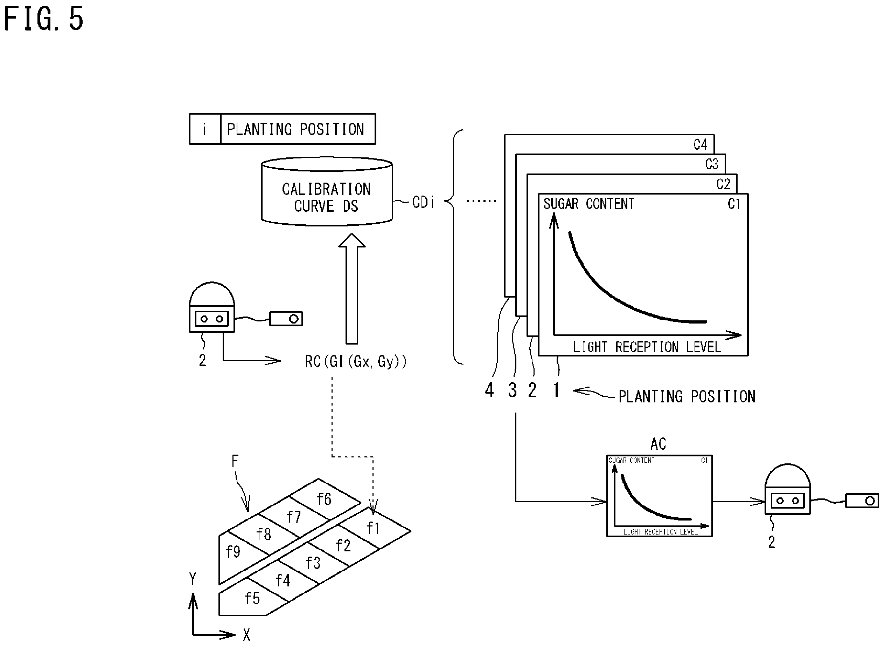

The planting position is identification information for identifying each field. For example, in Table 1, the planting positions are 1 to 3. The field with the planting position of 1 corresponds to, for example, the field indicated by f1 in FIG. 5.

The field region information is information indicating a boundary of land on the ground surface of each field. The field region information is, for example, information including a plurality of longitudes and latitudes of respective corners where boundaries of the field intersect. In other words, the spread of the field on the ground surface is represented as a polygon. As illustrated in Table 1, the field region information with the planting position of 1 is expressed as, for example, (x₁₀, y₁₀), (x₁₁, y₁₁), (x₁₂, y₁₂),..., and includes data of longitude and latitude of four corners. For example, x₁₀ indicates longitude, and y₁₀ indicates latitude. The size of the field may be, for example, 1 hectare, 1 m × 20 m corresponding to one ridge, or 1 m × 1 m corresponding to one tree.

### [Calibration Curve Determination Processing]

FIG. 5 is an explanatory diagram illustrating an example of calibration curve determination processing.

As illustrated in FIG. 5, in the calibration curve determination processing, first, the information providing server 3 receives a calibration curve request RC from the measurement device 2. The calibration curve request RC is a command that the measurement device 2 requests the information providing server 3 to send a calibration curve. The calibration curve request RC includes position information GI indicating a position where the measurement device 2 has measured a farm product, and the position information GI includes Gx indicating longitude and Gy indicating latitude.

Next, the control device 41 of the information providing server 3 searches the calibration curve data set CDi based on the position information GI to acquire the planting position.

The control device 41 searches the calibration curve data set CDi based on the position information GI included in the calibration curve request RC, and determines which region of the field the position information GI is included in. Specifically, for example, the control device 41 first reads the first field region information from the calibration curve data set CDi. Then, it is determined whether or not the position information GI included in the received calibration curve request RC is within the region of the field defined by the longitude and latitude of each corner included in the field region information, and the planting position is determined.

In FIG. 5, for example, it is determined that the position information GI (Gx, Gy) is included in the field f1 on the assumption that the position information GI is included in the field f1. When it is determined that the position information GI is not within the region of the field, the control device 41 reads the next field region information and determines whether or not the position information GI is within the region of the field. Then, all the field region information is read, and when it is determined that the position information GI is not in any region of the field, it is determined that there is "no" data corresponding to the position information GI in the calibration curve data set.

Next, the control device 41 reads the calibration curve Ci from the storage device 43 in which the calibration curve data set is stored based on the determined planting position. The calibration curve Ci to be read out is the calibration curve Ci associated with the field region information determined that the position information GI is within the region of the field. Then, the control device 41 creates a calibration curve response AC including the read calibration curve Ci.

Note that when it is determined that there is "no" data corresponding to the position information GI in the calibration curve data set, the control device 41 creates a calibration curve response AC including information (hereinafter referred to as Null information) indicating that there is "no" data corresponding to the position information GI in the calibration curve data set.

### [Quality Determination Processing]

The processing unit 24 of the measurement device 2 executes the quality determination processing 29 for determining the quality of a farm product based on the light reception level of the measurement head 21 and the calibration curve.

The light reception level of the measurement head 21 is, for example, a level of light of a predetermined wavelength included in spectrum information of received light obtained by irradiating a farm product SK with light and causing the spectrometer 23 to receive reflected light transmitted through and reflected by the farm product SK. The calibration curve is a calibration curve determined by the calibration curve determination processing 44 as described above and transmitted from the information providing server 3.

When the calibration curve is a graph, the quality determination processing 29 refers to the graph, obtains the quality (sugar content or the like) corresponding to the light reception level output by the spectrometer 23, and determines the quality (sugar content or the like) of the measured farm product. When the calibration curve is an approximate expression approximating the graph, the light reception level is substituted into the approximate expression to determine the quality (sugar content or the like).

### [Operations of Measurement Device and Information Providing Server]

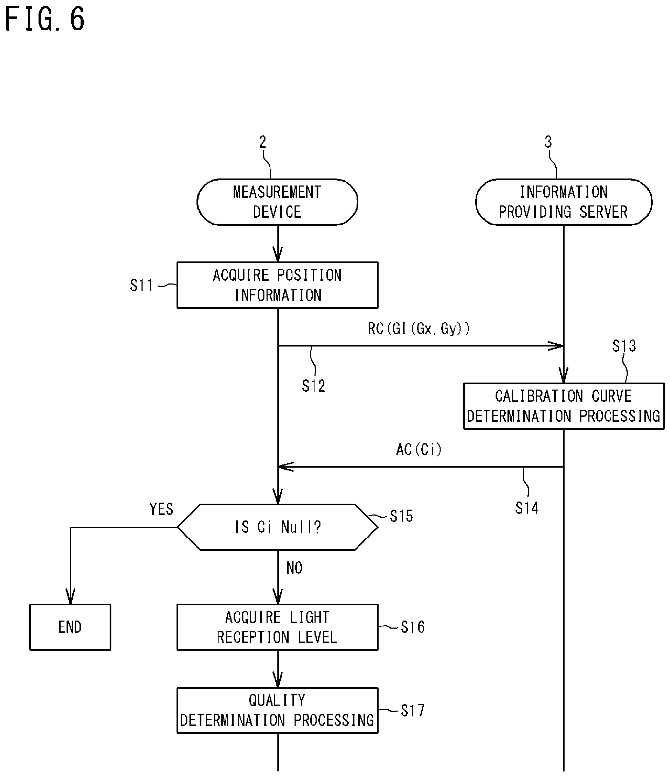

FIG. 6 is a sequence diagram illustrating an example of operations of the measurement device 2 and the information providing server 3. The measurement device 2 starts the measurement operation, for example, when a measurement start button (not illustrated) provided in the measurement device 2 is pressed.

### Step S11:

As illustrated in FIG. 6, in the case of measuring the quality of a farm product, the measurement device 2 first acquires position information GI of the present device (step S11 in FIG. 6). Specifically, the processing unit 24 transmits, to the position acquisition unit 27 connected via, for example, a universal serial bus (USB), a command (hereinafter referred to as a position information request) requesting transmission of the position information GI indicating the position of the present device on the ground surface.

The position acquisition unit 27 is, for example, a GPS receiver, receives a radio wave from a GPS satellite orbiting on a satellite orbit of the earth, and specifies a longitude Gx and a latitude Gy at which the present device is located. Upon receiving the position information request from the processing unit 24, the position acquisition unit 27 transmits position information GI indicating the longitude Gx and latitude Gy where the present device is present to the processing unit 24. The processing unit 24 receives the position information GI from the position acquisition unit 27 and acquires the position information. Although the acquisition of the position information by the GPS has been described, the present invention is not limited thereto, and the position may be specified by, for example, UWB. The processing unit 24 that has acquired the position information then proceeds to step S12.

### Step S12:

Next, the measurement device 2 transmits the calibration curve request RC to the information providing server 3 (step S12). Specifically, for example, the processing unit 24 of the measurement device 2 controls the communication unit 26 to cause the communication unit 26 to transmit the calibration curve request RC. The calibration curve request RC is a command for requesting transmission of a calibration curve. The calibration curve request RC includes the position information GI and requests transmission of the calibration curve in the field corresponding to the longitude Gx and the latitude Gy indicated by the position information GI. After the calibration curve request RC is transmitted, the process proceeds to step S13.

### Step S13:

Next, the information providing server 3 that has received the calibration curve request RC executes the calibration curve determination processing 44 (step S13). As described above, the calibration curve determination processing 44 determines the calibration curve of the field corresponding to the position information GI included in the received calibration curve request RC. Then, the calibration curve determination processing 44 creates a calibration curve response AC including the determined calibration curve. After creating the calibration curve response AC, the information providing server 3 proceeds to step S14.

### Step S14:

Next, the information providing server 3 controls the communication device 42 and causes the communication device 42 to transmit the calibration curve response AC. The calibration curve response AC includes the read calibration curve Ci. The communication device 42 transmits the calibration curve response AC to the measurement device 2 that has transmitted the calibration curve request RC. Then, the measurement device 2 receives the transmitted calibration curve response AC. After receiving the calibration curve response AC, the measurement device 2 proceeds to step S15.

### Step S15:

Next, the measurement device 2 determines whether or not the information included in the received calibration curve response AC is Null information (step S15). When it is determined that it is Null information (YES in step S15), the measurement device 2 ends the operation. For example, when the measurement device 2 is erroneously operated outside the field, there is no calibration curve corresponding to the position information, and thus the operation is ended. When it is determined that it is not Null information (NO in step S15), the measurement device 2 proceeds to step S16.

### Step S16:

Next, the measurement device 2 acquires the light reception level of the measurement head 21 that projects light having a predetermined wavelength to the farm product and receives reflected light (step S16). Specifically, the processing unit 24 controls the light source 22 and the spectrometer 23, and receives a signal corresponding to the light reception level of the light received by the measurement head 21. The measurement head 21 outputs a signal corresponding to the light reception level of the received light.

The signal corresponding to the light reception level is, for example, an analog signal that is a voltage or a current. The analog signal is converted into digital information by an analog to digital converter (ADC) provided outside or inside the processing unit 24. The processing unit 24 acquires the light reception level of the measurement head 21 by receiving the converted digital signal. After acquiring the light reception level of the measurement head 21, the processing unit 24 proceeds to step S17.

### Step S17:

Next, the measurement device 2 executes the above-described quality determination processing 29, and determines a measurement value of quality of the farm product based on the acquired light reception level of the measurement head 21 and the calibration curve Ci included in the received calibration curve response AC (step S17). The processing unit 24 controls the display unit 28 to display the measurement value on the liquid crystal display. The determined measurement value of the quality of the farm product is displayed on the display unit 28.

### [Summary]

As described above, after the measurement start button of the measurement device 2 is pressed and the measurement operation is started, the measurement value of the quality of the farm product is displayed on the display unit 28 of the measurement device 2 without additional operation by the worker, and the quality of the farm product can be easily measured.

In addition, even when the quality varies depending on the field, the ridge, and the tree within the same variety, the calibration curve is determined for each field and the like, and thus, even in this case, the quality can be determined by the calibration curve corresponding to the field and the like. In addition, even for farm products having similar appearances despite being of different varieties, such as grapes, since the calibration curve is determined for each field, it is possible to suppress erroneous measurement of the variety.

Note that, in the case of continuously measuring the quality of a farm product, the calibration curve received at the first time may be used for measuring the quality of the farm product at the second and subsequent times. The determination as to whether the measurement has been continuously performed is made based on, for example, whether the measurement start button has been pressed within a predetermined period before the measurement start button is pressed. The predetermined period is, for example, one minute. When the measurement start button is pressed again within one minute, it is determined that the measurement is continuous, and when one minute or more has elapsed, it is determined that the measurement is not continuous.

When it is determined to be continuous, after the measurement start button is pressed to start the measurement operation, the measurement device 2 immediately executes step S15 without executing steps S11, S12, and S14 to acquire the light reception level from the measurement head 21, and executes the quality determination processing 29 of step S16 using the calibration curve received at the first time to determine the measurement value of the quality of the farm product.

### [Second Embodiment]

The second embodiment is further different from the first embodiment in that a calibration curve is determined based on the measurement time of quality of a farm product. The rest is the same as that of the first embodiment.

Hereinafter, the same components as those of the first embodiment are denoted by the same reference numerals, and the description of the same components, functions, and operations will be omitted.

### [Measurement Device]

In the second embodiment, the measurement device 2 further includes a timer unit (not illustrated). The timer unit counts the time including the date. The timer unit is backed up by a battery and always counts the time regardless of whether the power supply of the measurement device 2 is turned on or off.

### [Information Providing Server]

In the second embodiment, the hardware configuration of the information providing server 3 is the same, but the configuration of the calibration curve data set is different from that of the first embodiment.

Table 2 is an example of a calibration curve data set in the second embodiment.

**[Table 2]**

| Calibration curve data set | | | |
|---|---|---|---|
| planting position | Measurement time slot | Calibration curve | Field region information |
| 1 | 0:00 to 6:00 | (i₁₀. q₁₀), (i₁₁, q₁₁), (i₁₂, q₁₂), ... | (x₁₀, y₁₀), (x_{11,} y₁₁). (x₁₂, y₁₂),... |
| | 6:00 to 12:00 | (i₂₀. q₂₀), (i₂₁, q₂₁), (i₂₂, q₂₂),... | |
| | 12:00 to 18:00 | (i₃₀. q₃₀), (i₃₁, q₃₁), (i₃₂, q₃₂),... | |
| | 18:00 to 0:00 | (i₄₀. q₄₀), (i41, q41), (i₄₂, q42),... | |
| 2 | 0:00 to 6:00 | (i₅₀. q₅₀), (i₅₁, q₅₁), (i₅₂, q₅₂), ... | (x₂₀, y20), (x₂₁, y21). (x₂₂, y₂₂),... |
| | 6:00 to 12:00 | (i₆₀. q₆₀), (i61, q₆₁), (i₆₂, q₆₂),... | |
| | 12:00 to 18:00 | (i₇₀. q₇₀), (i₇₁, q₇₁), (i₇₂, q₇₂),... | |
| | 18:00 to 0:00 | (i₈₀. q₈₀), (i_{81,} q₈₁), (i₈₂, q₈₂),... | |

Compared with the calibration curve data set of Table 1 of the first embodiment, the calibration curve data set of Table 2 of the second embodiment further includes measurement time slots. The calibration curve data set of the second embodiment includes a calibration curve for each planting position of a farm product for each time slot of the day. For example, in the example illustrated in Table 2, the calibration curve is stored by being divided into four units of 0:00 to 6:00, 6:00 to 12:00, 12:00 to 18:00, and 18:00 to 0:00 every 6 hours.

Plants that produce a farm product are affected by sunlight, temperature, and the like even in the day, and the quality (sugar content or the like) of the farm product also changes. Therefore, the quality of a farm product can be more accurately measured by switching the calibration curve according to the time slot. In Table 2, the measurement time slots are four equal divisions at intervals of six hours, but are not limited thereto, and may be six or eight equal divisions. In addition, the length of each measurement time slot may be changed, or the number of divisions and the length of the measurement time slot may be changed for each planting position.

In the example of Table 2, it is assumed that 0:00 Japan Standard Time is 0:00 of the measurement time slots, but this is not limited thereto, and the sunrise time may be used as the starting point of the measurement time slots. That is, the measurement time slots are defined with the sunrise time as the starting point. Then, the measurement time is converted into how many hours have elapsed from the sunrise time, and it is determined which measurement time slot the measurement time belongs to.

Regarding grapes for brewing wine, it is known that high quality wine can be brewed by brewing grapes harvested before dawn. In addition, it is also known that the quality of farm products harvested in the morning is high, such as "strawberry harvested in the morning". Therefore, by setting the measurement time slot on the basis of the sunrise time, more accurate quality measurement can be performed.

The sunrise time can be calculated based on the date of measurement and the longitude and latitude of the measurement position. As described in the first embodiment, the measurement device 2 acquires the position information from the position acquisition unit 27. Furthermore, in the second embodiment, as described later, the measurement device 2 can transmit the time including the measured date to the information providing server 3.

Therefore, the measurement device 2 and the information providing server 3 can specify the sunrise time based on the position information and the measurement time. Therefore, even when the measurement time slots of the calibration curve database are defined on the basis of the sunrise time, the information providing server 3 can determine the calibration curve corresponding to the measurement time slot based on the sunrise time.

### [Calibration Curve Determination Processing]

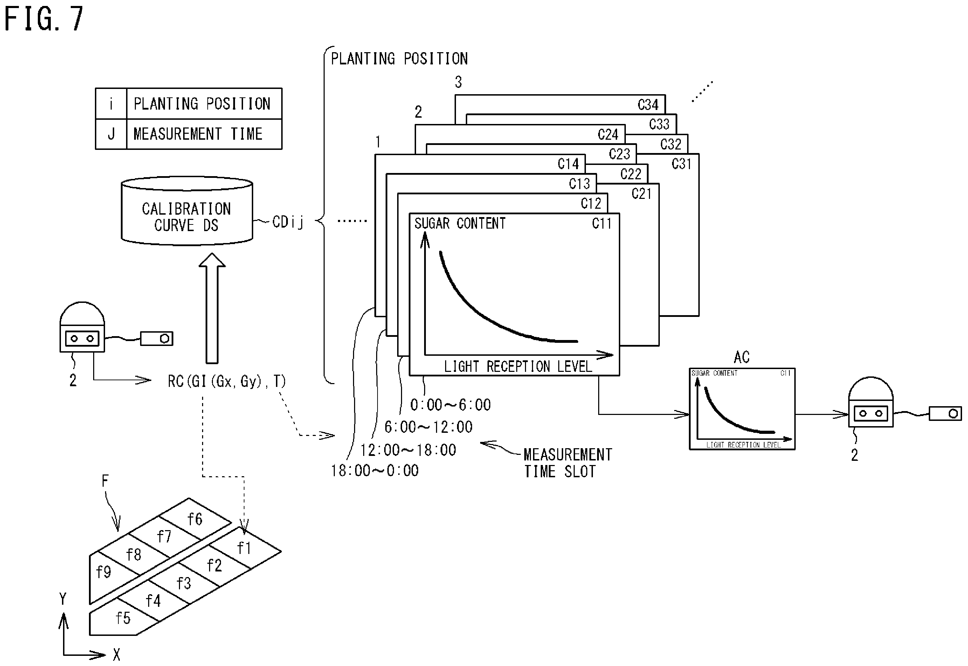

FIG. 7 is an explanatory diagram illustrating an example of calibration curve determination processing in the second embodiment.

As illustrated in FIG. 7, in the calibration curve determination processing, first, the information providing server 3 receives the calibration curve request RC from the measurement device 2. The calibration curve request RC is a command that the measurement device 2 requests the information providing server 3 to send a calibration curve. The calibration curve request RC includes position information GI indicating a position where the measurement device 2 has measured a farm product, and the position information GI includes Gx indicating longitude and Gy indicating latitude. In the second embodiment, the calibration curve request RC further includes a measurement time T. The measurement time T is, for example, a time when the measurement start button of the measurement device 2 is pressed.

Next, based on the position information GI included in the calibration curve request RC, the control device 41 searches calibration curve data set CDij in the same manner as described in the first embodiment, determines which region of the field the position information GI is included in, and determines the planting position.

Next, the control device 41 determines in which of the measurement time slots associated with the planting position determined above the measurement time T included in the received calibration curve request RC is included. Specifically, the first measurement time slot is read from the calibration curve data set CDij.

Then, it is determined whether or not the measurement time T is between the start time and the end time of the read measurement time slot. When it is determined that the measurement time T is not in the measurement time slot, the control device 41 reads the next measurement time slot and determines whether or not the measurement time T is in the read measurement time slot. This process is repeated to determine which measurement time slot the measurement time T belongs to.

Next, the control device 41 reads a calibration curve Cij corresponding to the determined planting position and measurement time slot from the storage device 43 in which the calibration curve data set CDij is stored.

The communication device 42 transmits the calibration curve response AC to the measurement device 2. The calibration curve response AC includes the read calibration curve. The control device 41 controls the communication device 42 to transmit the calibration curve response AC to the measurement device 2 that has transmitted the calibration curve request RC.

Note that when the measurement time slots of the calibration curve database are defined on the basis of the sunrise time, the control device 41 first calculates the sunrise time on the basis of the position information GI and the measurement time T included in the calibration curve request RC received from the measurement device 2. In this case, the measurement time T needs to include a date. The control device 41 calculates, from the calculated sunrise time and measurement time T, what time and how many minutes after the sunrise time (hereinafter referred to as a corrected measurement time) the measurement was performed.

The control device 41 determines a measurement time slot to which the corrected measurement time belongs. Then, the control device 41 reads the calibration curve Cij corresponding to the determined planting position and the determined measurement time slot from the storage device 43 in which the calibration curve data set CDij is stored. Then, the control device 41 creates a calibration curve response AC including the read calibration curve Cij.

### [Operations of Measurement Device and Information Providing Server]

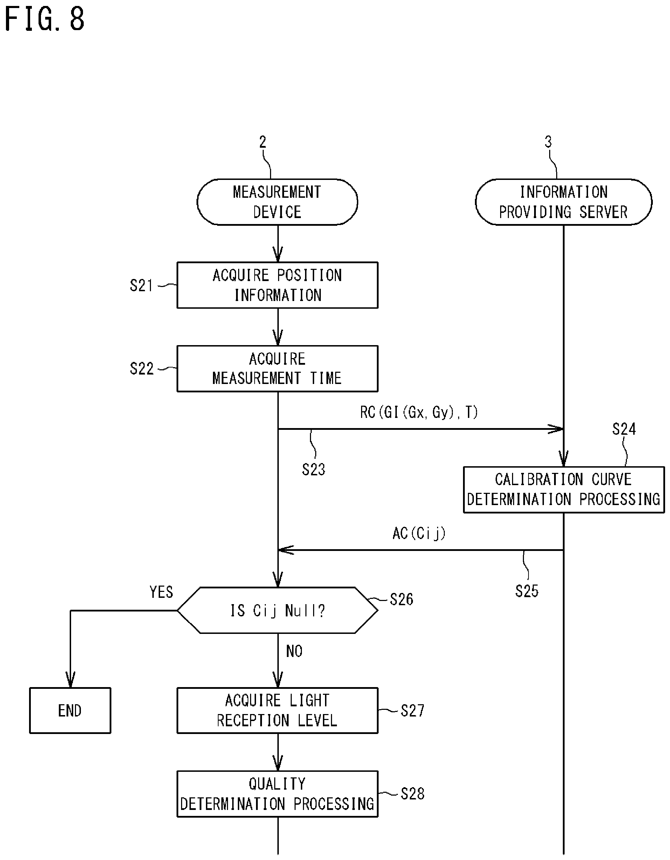

FIG. 8 is a sequence diagram illustrating an example of operations of the measurement device 2 and the information providing server in the second embodiment.

As illustrated in FIG. 8, the measurement operation in the second embodiment is different from that in the first embodiment in three points. The first point is that a measurement time acquisition step is added. The second point is that the calibration curve request RC further includes the measurement time. The third point is that the calibration curve determination processing is performed including the measurement time as described above. The different points will be mainly described.

### Step S21:

The measurement device 2 starts the measurement operation, for example, when a measurement start button (not illustrated) provided in the measurement device 2 is pressed. The measurement device 2 first acquires the position information GI of the present device (step S21 in FIG. 8). The processing unit 24 receives the position information GI from the position acquisition unit 27 and acquires the position information. Specifically, it is similar to step S11 in the first embodiment. The processing unit 24 that has acquired the position information then proceeds to step S22.

### Step S22:

Next, the measurement device 2 acquires the time (measurement time) at which the measurement is started from the timer unit. Specifically, for example, when the measurement start button is pressed, the processing unit 24 accesses the timer unit and reads the time counted by the timer unit.

In the case of using the calibration curve data set divided by the measurement time slots based on the sunrise time, the processing unit 24 reads the time including the date. After reading the time and acquiring the measurement time T, the processing unit 24 proceeds to step S23.

### Step S23:

Next, the measurement device 2 transmits the calibration curve request RC to the information providing server 3 (step S23). Specifically, it is similar to step S12 in the first embodiment. The calibration curve request RC includes the position information GI and the measurement time T, and requests transmission of a calibration curve corresponding to the longitude Gx, the latitude Gy, and the measurement time T indicated by the position information GI. After the calibration curve request RC is transmitted, the process proceeds to step S24.

### Step S24:

Next, the information providing server 3 that has received the calibration curve request RC executes the calibration curve determination processing 44 (step S24). As described above, the calibration curve determination processing 44 determines the planting position corresponding to the position information GI included in the received calibration curve request RC, and determines the measurement time slot corresponding to the measurement time T. Then, the calibration curve determination processing 44 reads the calibration curve Cij from the calibration curve data set CDij based on the determined planting position and the measurement time slot.

Then, the information providing server 3 creates a calibration curve response AC including the calibration curve Cij. It is included in and transmitted to the measurement device 2. After creating the calibration curve response AC, the information providing server 3 proceeds to step S25.

### Step S25:

Next, the information providing server 3 controls the communication device 42 and causes the communication device 42 to transmit the calibration curve response AC. The calibration curve response AC includes the calibration curve Cij read from the calibration curve data set CDij. The communication device 42 transmits the calibration curve response AC to the measurement device 2 that has transmitted the calibration curve request RC. The measurement device 2 receives the transmitted calibration curve response AC. After receiving the calibration curve response AC, the measurement device 2 proceeds to step S26.

### Step S26:

Next, the measurement device 2 determines whether or not the information included in the received calibration curve response AC is Null information (step S26). When it is determined that it is Null information (YES in step S26), the measurement device 2 ends the operation. When it is determined that it is not Null information (NO in step S26), the measurement device 2 proceeds to step S27.

### Step S27:

Next, the measurement device 2 acquires the light reception level of the measurement head 21 that projects light having a predetermined wavelength to the farm product and receives reflected light (step S27).

Specifically, it is similar to step S16 in the first embodiment. After acquiring the light reception level of the measurement head 21, the processing unit 24 proceeds to step S28.

### Step S28:

Next, the measurement device 2 executes the quality determination processing 29 described in the first embodiment, and determines a measurement value of quality of the farm product based on the acquired light reception level of the measurement head 21 and the calibration curve Cij included in the received calibration curve response AC (step S28). The processing unit 24 controls the display unit 28 to display the measurement value on the liquid crystal display. The determined measurement value of the quality of the farm product is displayed on the display unit 28.

### [Summary]

As described above, after the measurement start button of the measurement device 2 is pressed and the measurement operation is started, the measurement value of the quality of the farm product is displayed on the display unit 28 of the measurement device 2 without additional operation by the worker, and the quality of the farm product can be easily measured. Then, the calibration curve is determined according to the measurement time, and the quality of the farm product can be measured more accurately. In particular, it is possible to more accurately measure the quality of a farm product whose quality (sugar content or the like) increases in the morning or before sunrise.

### [Third Embodiment]

The third embodiment is different from the first embodiment in three points.

The first point is that the quality determination processing is performed in the server 3.

The second point is that, as the quality determination processing is performed in the server 3, the light reception level of the measurement head 21 is transmitted from the measurement device 2 to the server 3.

The third point is that the response sent from the server 3 to the measurement device 2 is not the calibration curve but the quality of a farm product determined by the server 3.

Hereinafter, different points will be mainly described, the same components as those in the first embodiment will be denoted by the same reference numerals, and the description of the same components, functions, and operations will be omitted.

### [Measurement Device]

The hardware configuration of the measurement device 2 in the third embodiment is the same as that in the first embodiment. However, the processing unit 24 does not have a function of quality determination processing.

### [Information Providing Server]

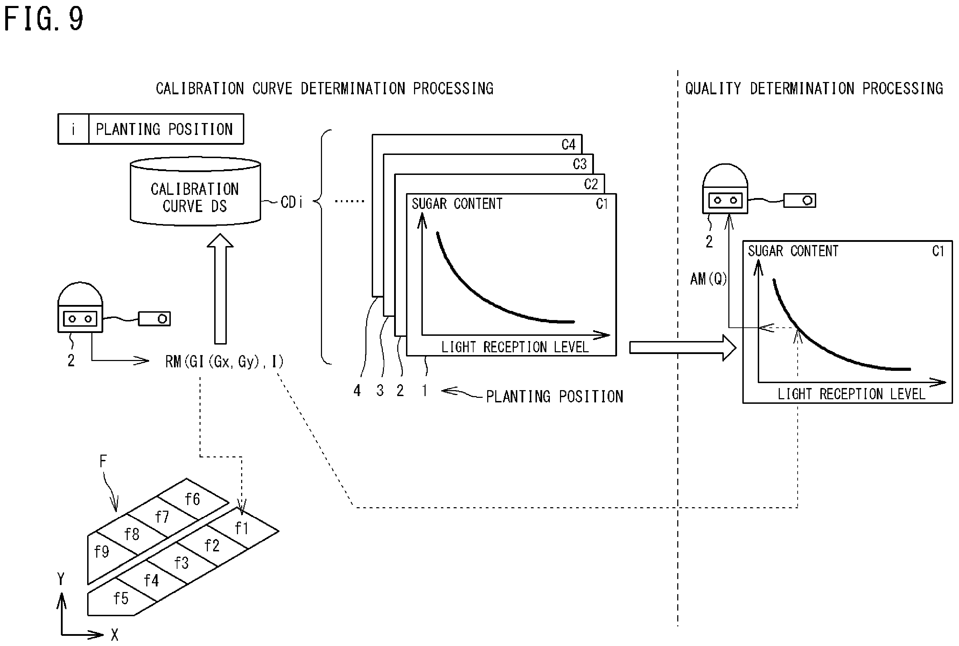

FIG. 9 is an explanatory diagram illustrating an example of calibration curve determination processing and quality determination processing in the third embodiment. In the third embodiment, the hardware configuration of the information providing server 3 is the same as that of the first embodiment, but the control device 41 has a function of quality determination processing in addition to the calibration curve determination processing.

### [Calibration Curve Determination Processing]

As illustrated in FIG. 9, in the calibration curve determination processing, first, the information providing server 3 receives a measurement value request RM from the measurement device 2. The measurement value request RM is a command that the measurement device 2 requests the information providing server 3 to transmit a measurement value. The measurement value request RM includes position information GI indicating a position where the measurement device 2 has measured the farm product, and the position information GI includes Gx indicating longitude and Gy indicating latitude. The measurement value request RM further includes a light reception level I of the measurement head 21.

Next, the control device 41 searches the calibration curve data set CDi based on the position information GI to acquire the planting position.

The control device 41 searches the calibration curve data set CDi based on the position information GI included in the measurement value request RM, determines which region of the field the position information GI is included in as described in the first embodiment, and determines the planting position.

When it is determined that the position information GI is not in the region of any field, it is determined that there is "no" data corresponding to the position information GI in the calibration curve data set. In FIG. 9, for example, it is assumed that the position information GI (Gx, Gy) is in the field f1.

Next, the control device 41 reads the calibration curve Ci from the storage device 43 in which the calibration curve data set CDi is stored based on the determined planting position. The calibration curve Ci to be read out is the calibration curve Ci associated with the planting position where the position information GI is determined to be within the region of the field.

In the case of FIG. 9, since the position information GI (Gx, Gy) is within the field f1, the calibration curve C1 corresponding to the planting position "1" is read out.

### [Quality Determination Processing]

Next, the control device 41 executes quality determination processing for determining the quality of a farm product based on the light reception level of the measurement head 21 received from the measurement device 2 and the read calibration curve Ci. The farm product SK is irradiated with light in the measurement device 2, and reflected light transmitted through and reflected by the farm product SK is received by the spectrometer 23, and the level of light of a predetermined wavelength included in spectrum information of the received light is the light reception level of the measurement head 21. The calibration curve Ci is a calibration curve determined by the calibration curve determination processing 44 described above.

In the quality determination processing, when the calibration curve is a graph, the quality (sugar content or the like) corresponding to the light reception level output by the spectrometer 23 is obtained with reference to the graph, and the measurement value of the quality (sugar content or the like) of the measured farm product is determined. When the calibration curve is an approximate expression approximating the graph, the light reception level is substituted into the approximate expression to determine the measurement value of the quality (sugar content or the like). Then, the control device 41 creates a measurement value response AM including the determined measurement value of quality.

### [Operations of Measurement Device and Information Providing Server]

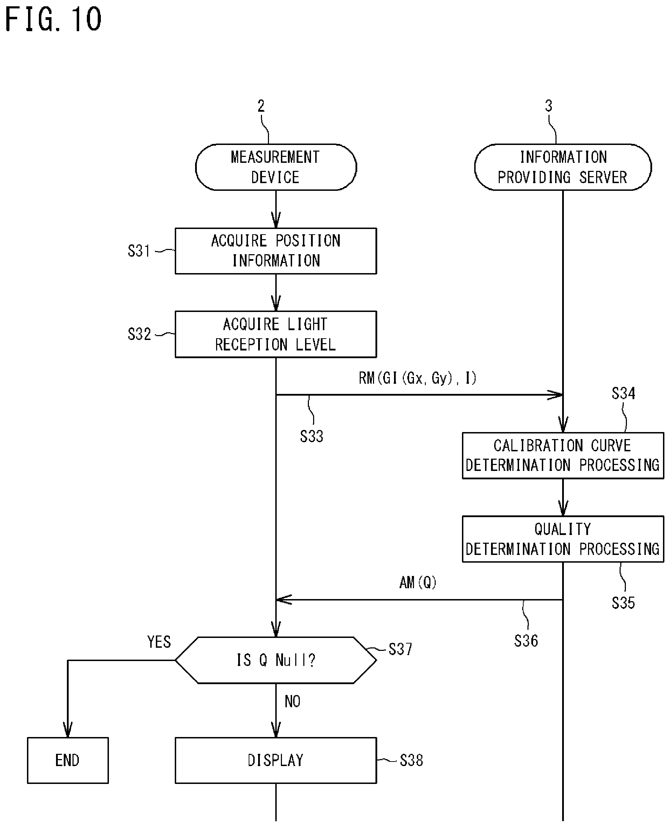

FIG. 10 is a sequence diagram illustrating an example of operations of the measurement device 2 and the information providing server 3 in the third embodiment.

The measurement device 2 starts the measurement operation, for example, when a measurement start button (not illustrated) provided in the measurement device 2 is pressed.

### Step S31:

As illustrated in FIG. 10, in the case of measuring the quality of a farm product, the measurement device 2 first acquires position information GI of the present device (step S31 in FIG. 10). Specifically, step S31 is similar to step S11 in the first embodiment. The processing unit 24 receives the position information GI from the position acquisition unit 27 and acquires the position information. The processing unit 24 that has acquired the position information then proceeds to step S32.

### Step S32:

Next, the measurement device 2 acquires the light reception level of the measurement head 21 that projects light having a predetermined wavelength to the farm product and receives reflected light (step S32). Specifically, it is similar to step S16 in the first embodiment. After acquiring the light reception level of the measurement head 21, the processing unit 24 proceeds to step S33.

### Step S33:

Next, the measurement device 2 transmits the measurement value request RM to the information providing server 3 (step S33). Specifically, the processing unit 24 of the measurement device 2 controls the communication unit 26 to cause the communication unit 26 to transmit the measurement value request RM. The measurement value request RM is a command that the measurement device 2 requests the information providing server 3 to transmit a measurement value.

The measurement value request RM includes position information GI indicating a position where the measurement device 2 has measured the farm product, and the position information GI includes Gx indicating longitude and Gy indicating latitude. The measurement value request RM further includes the light reception level I of the measurement head 21. After the measurement value request RM is transmitted, the process proceeds to step S34.

### Step S34:

Next, the information providing server 3 that has received the measurement value request RM executes the calibration curve determination processing 44 (step S34). As described above, the calibration curve determination processing 44 determines the planting position corresponding to the position information GI included in the received measurement value request RM, and reads the calibration curve Ci corresponding to the planting position. After the reading, the information providing server 3 proceeds to step S35.

### Step S35:

Next, the control device 41 of the information providing server 3 executes the above-described quality determination processing 29, and determines the measurement value of the quality of the farm product based on the light reception level I of the measurement head 21 received from the measurement device 2 and the read calibration curve Ci (step S35).

Then, the control device 41 creates the measurement value response AM including the determined measurement value of the quality of the farm product. After creating the measurement value response AM, the information providing server 3 proceeds to step S37. When it is determined that there is "no" data corresponding to the position information GI in the calibration curve data set, the control device 41 creates the measurement value response AM including Null information.

### Step S36:

Next, the control device 41 controls the communication device 42 to cause the communication device 42 to transmit the measurement value response AM. The measurement value response AM includes the determined measurement value of quality. The communication device 42 transmits the measurement value response AM to the measurement device 2 that has transmitted the measurement value request RM. Then, the measurement device 2 receives the measurement value response AM transmitted as information (step S36). The received measurement value response AM includes a measurement value of quality. After receiving the measurement value response AM, the measurement device 2 proceeds to step S37.

### Step S37:

Next, the measurement device 2 determines whether or not the information included in the received measurement value response AM is Null information (step S37). When it is determined that it is Null information (YES in step S37), the measurement device 2 ends the operation. For example, when the measurement device 2 is erroneously operated outside the field, there is no calibration curve corresponding to the position information, and thus the operation is ended. When it is determined that it is not Null information (NO in step S37), the measurement device 2 proceeds to step S38.

### Step S38:

Next, the measurement device 2 displays the measurement value Q of the quality of the farm product included in the received measurement value response AM (step S38). The processing unit 24 controls the display unit 28 to display the measurement value on the liquid crystal display. The received measurement value of the quality of the farm product is displayed on the display unit 28.

### [Summary]

As described above, after the measurement start button of the measurement device 2 is pressed and the measurement operation is started, the measurement value of the quality of the farm product is displayed on the display unit 28 of the measurement device 2 without additional operation by the worker, and the quality of the farm product can be easily measured. In addition, since there is no heavy processing in the measurement device, even the measurement device 2 having a low processing capability can easily measure the quality of a farm product.

Usually, the processing capability of the processing unit 24 of the measurement device 2 is low, and the processing capability of the control device 41 of the information providing server 3 is often high. Therefore, in a case where the processing becomes heavy, it is effective that the information providing server 3 performs the quality determination processing. The above-described quality determination processing determines the measurement value of the quality by referring to the graph or substitution into the approximate expression regarding the light reception level I of the measurement head 21, but is not limited thereto.

For example, the light reception level of the measurement head 21 may be spectrum information indicating the intensity of light in a wavelength region from the first wavelength to the second wavelength longer than the first wavelength, instead of the intensity of light of a specific wavelength. In the quality determination processing in a case where the light reception level is the spectrum information, for example, a multivariable representing the spectrum information is input, and processing of a plurality of steps is performed on the input of the multivariable to determine the measurement value of the quality. For this reason, when the light reception level is spectrum information, the quality determination processing may be heavy. It is effective that such heavy quality determination processing is executed by the information providing server 3 having high processing capability.

### [Fourth Embodiment]

The fourth embodiment is different from the third embodiment in that a calibration curve is determined based on the measurement time of quality of a farm product, but the other points are the same as those of the third embodiment. The same components as those of the third embodiment are denoted by the same reference numerals, and the description of the same components, functions, and operations is omitted.

### [Measurement Device]

In the fourth embodiment, the measurement device 2 includes a timer unit (not illustrated) similar to that of the second embodiment. The timer unit counts the time including the date. The timer unit is backed up by a battery and always counts the time regardless of whether the power supply of the measurement device 2 is turned on or off.

### [Information Providing Server]

In the fourth embodiment, the hardware configuration of the information providing server 3 is the same, but the configuration of the calibration curve data set is different from that of the third embodiment, and the calibration curve data set CDij as in Table 2 described in the second embodiment to which the measurement time slot is further added is used.

### [Calibration Curve Determination Processing]

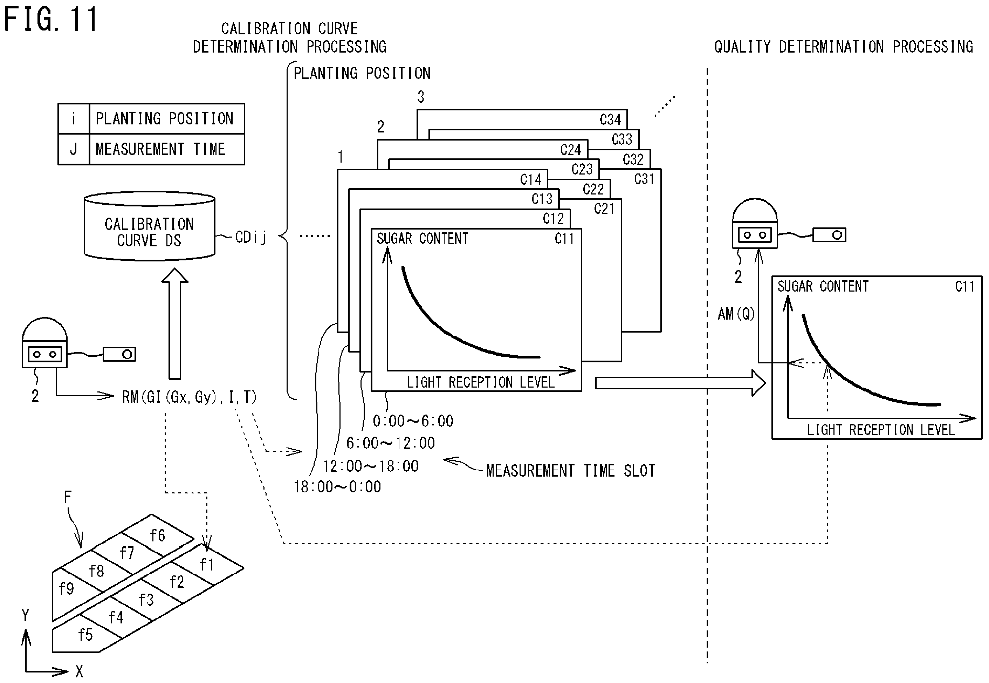

FIG. 11 is an explanatory diagram illustrating an example of calibration curve determination processing in the fourth embodiment.

As illustrated in FIG. 11, in the calibration curve determination processing, first, the information providing server 3 receives the measurement value request RM from the measurement device 2. The measurement value request RM is a command that the measurement device 2 requests the information providing server 3 to transmit a measurement value. The measurement value request RM includes the position information GI, the light reception level I, and the measurement time T.

The position information GI indicates a position where the measurement device 2 has measured a farm product, and includes Gx indicating longitude and Gy indicating latitude. The light reception level is, for example, a level of light of a predetermined wavelength included in spectrum information of light received by the spectrometer 23 that receives reflected light that has transmitted through and being reflected by the farm product SK after irradiating the farm product SK with light. The measurement time T is, for example, a time when the measurement start button of the measurement device 2 is pressed.

Next, the control device 41 searches the calibration curve data set CDij as described in the first embodiment on the basis of the position information GI included in the measurement value request RM, determines which region of the field the position information GI is included in, and determines the planting position.

Next, the control device 41 determines in which of the measurement time slots associated with the planting position determined above the measurement time T included in the received measurement value request RM is included. Specifically, the calibration curve determination processing is similar to that of the second embodiment.

Next, the control device 41 reads a calibration curve Cij corresponding to the determined planting position and measurement time slot from the storage device 43 in which the calibration curve data set CDij is stored.

### [Quality Determination Processing]

Next, the control device 41 executes the quality determination processing 29 for determining the quality of a farm product based on the light reception level I of the measurement head 21 received from the measurement device 2 and the read calibration curve Cij, and determines a measurement value of the quality based on the received light reception level I and the read Cij. Specifically, it is similar to that of the third embodiment. Then, the control device 41 creates a measurement value response AM including the determined measurement value.

### [Operations of Measurement Device and Information Providing Server]

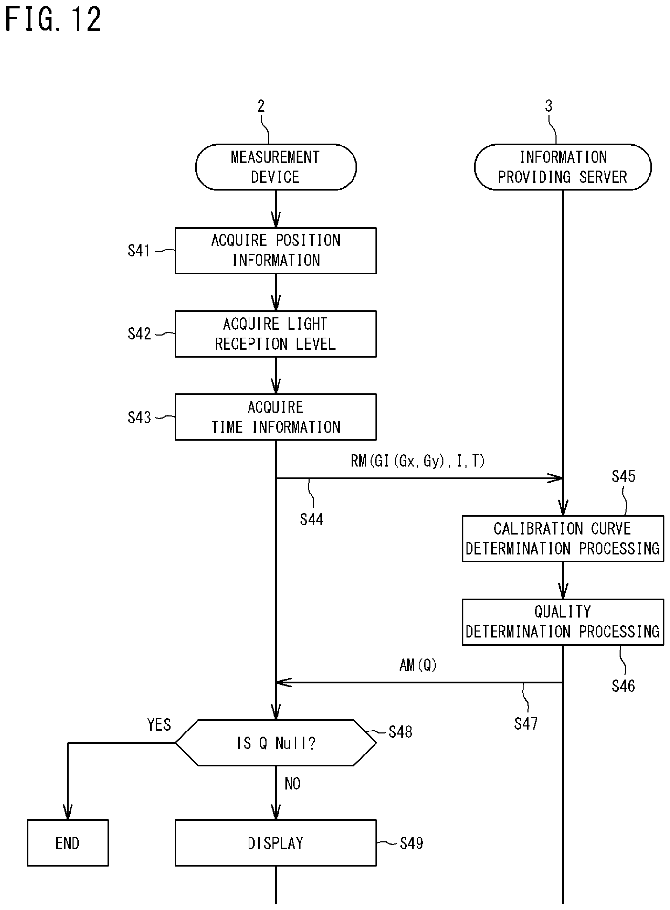

FIG. 12 is a sequence diagram illustrating an example of the operation of the measurement device 2 and the information providing server 3 in the fourth embodiment. The measurement device 2 starts the measurement operation, for example, when a measurement start button provided in the measurement device 2 is pressed.

### Step S41:

As illustrated in FIG. 12, in the case of measuring the quality of a farm product, the measurement device 2 first acquires position information GI of the present device (step S41 in FIG. 12). Specifically, step S41 is similar to step S11 in the first embodiment. The processing unit 24 receives the position information GI from the position acquisition unit 27. After receiving the position information, the processing unit 24 proceeds to step S42.

### Step S42:

Next, the measurement device 2 acquires the light reception level of the measurement head 21 that projects light having a predetermined wavelength to the farm product and receives reflected light (step S42). Specifically, it is similar to step S16 in the first embodiment. After acquiring the light reception level of the measurement head 21, the processing unit 24 proceeds to step S43.

### Step S43:

Next, the measurement device 2 acquires the time (measurement time) at which the measurement is started from the timer unit. Specifically, for example, when the measurement start button is pressed, the processing unit 24 accesses the timer unit and reads the time counted by the timer unit. In the case of using the calibration curve data set divided by the measurement time slots based on the sunrise time, the processing unit 24 reads the time including the date. After reading the time and acquiring the measurement time, the processing unit 24 proceeds to step S44.

### Step S44:

Next, the measurement device 2 transmits the measurement value request RM to the information providing server 3 (step S44). Specifically, the measurement value request RM includes the measurement time T in addition to the position information GI and the light reception level I, which is similar to step S33 of the third embodiment. After the measurement value request RM is transmitted, the process proceeds to step S45.

### Step S45:

Next, the information providing server 3 that has received the measurement value request RM executes the calibration curve determination processing 44 (step S45). As described above, the calibration curve determination processing 44 determines the planting position corresponding to the position information GI included in the received measurement value request RM, and determines in which of the measurement time slots associated with the determined planting position the measurement time T included in the received measurement value request RM is included. Then, the calibration curve Cij corresponding to the determined planting position and the measurement time slot is read out. After the reading, the information providing server 3 proceeds to step S46.

### Step S46:

Next, the information providing server 3 executes the above-described quality determination processing 29, and determines the measurement value of the quality of the farm product based on the light reception level I of the measurement head 21 received from the measurement device 2 and the read calibration curve Cij (step S46). Then, the measurement device 2 creates the measurement value response AM including the determined measurement value of the quality. After creating the measurement value response AM, the information providing server 3 proceeds to step S47. When it is determined that there is "no" data corresponding to the position information GI in the calibration curve data set, the control device 41 creates the measurement value response AM including Null information.

### Step S47:

Next, the control device 41 of the information providing server 3 controls the communication device 42 and causes the communication device 42 to transmit the measurement value response AM. The measurement value response AM includes the determined measurement value of quality. The communication device 42 transmits the measurement value response AM to the measurement device 2 that has transmitted the measurement value request RM. Then, the measurement device 2 receives the transmitted measurement value response AM (step S47). The received measurement value response AM includes measurement values of the determined quality. After receiving the measurement value response AM, the measurement device 2 proceeds to step S48.

### Step S48:

Next, the measurement device 2 determines whether or not the information included in the received measurement value response AM is Null information (step S48). When it is determined that it is Null information (YES in step S48), the measurement device 2 ends the operation. For example, when the measurement device 2 is erroneously operated outside the field, there is no calibration curve corresponding to the position information, and thus the operation is ended. When it is determined that it is not Null information (NO in step S48), the measurement device 2 proceeds to step S49.

### Step S49:

Next, the measurement device 2 displays the measurement value Q of the quality of the farm product included in the received measurement value response AM (step S49). The processing unit 24 controls the display unit 28 to display the measurement value on the liquid crystal display. The received measurement value of the quality of the farm product is displayed on the display unit 28.

### [Summary]

As described above, after the measurement start button of the measurement device 2 is pressed and the measurement operation is started, the measurement value of the quality of the farm product is displayed on the display unit 28 of the measurement device 2 without additional operation by the worker, and the quality of the farm product can be easily measured.

Then, the calibration curve is determined according to the measurement time, and the quality of the farm product can be measured more accurately. In particular, it is possible to more accurately perform the quality of a farm product whose quality (sugar content or the like) increases in the morning or before sunrise. In addition, since there is no heavy processing in the measurement device, even the measurement device 2 having a low processing capability can easily measure the quality of a farm product.

### [3-1 Supplementary Note 1]

The embodiments disclosed herein are illustrative in all respects and are not restrictive. The scope of rights of the present invention is indicated by the claims rather than the above-described embodiments, and includes meanings equivalent to the claims and all modifications within the scope.

### REFERENCE SIGNS LIST

- 1: quality measurement system
- 2: measurement device
- 3: information providing server (server)
- 4: worker
- 21: measurement head
- 21a: light projecting unit
- 21b: light receiving unit
- 21c: head body
- 21d: annular distal end surface
- 21e: hole
- 22: light source
- 23: spectrometer
- 24: processing unit
- 25: storage unit
- 26: communication unit
- 27: position acquisition unit
- 28: display unit
- 29: quality determination processing
- 31: steering wheel
- 32: processing unit
- 41: control device
- 42: communication device
- 43: storage device
- 44: calibration curve determination processing
- AC: calibration curve response
- AM: measurement value response
- BS: radio base station
- C1: calibration curve
- CDi: calibration curve data set
- CDij: calibration curve data set
- Ci: calibration curve
- Cij: calibration curve
- F: field
- f1: to f9 field
- GI: position information
- Gx: longitude
- Gy: latitude
- I: light reception level
- NW: network
- Q: measurement value
- RC: calibration curve request
- RM: measurement value request
- SK: farm product
- JM: tree
- T: measurement time

## Claims

1. A quality measurement system comprising a measurement device for quality of a farm product and a server, wherein
the server includes:
a storage device that stores a data set including a calibration curve for each planting position of the farm product;
a communication device that receives position information of the measurement device; and
a control device that executes processing of determining the calibration curve to be used for measurement of the quality based on the received position information of the measurement device.

2. The quality measurement system for the farm product according to claim 1, wherein
the planting position is
information associated with field region information in which the farm product is grown.

3. The quality measurement system for the farm product according to claim 2, wherein
the data set further includes
the calibration curve of the planting position for each time slot of a day,
the communication device further receives
a time of measurement of the quality by the measurement device, and
the control device determines
the calibration curve to be used for measurement of the quality based on the received position information of the measurement device and the time slot including the received measurement time.

4. The quality measurement system for the farm product according to claim 3, wherein
the data set includes:
the calibration curve for a first time slot that is a nighttime time slot at the planting position; and
the calibration curve for a second time slot that is a time slot other than the first time slot at the planting position.

5. The quality measurement system for the farm product according to any one of claims 1 to 4, wherein
the communication device further receives
a light level of reflected light from the farm product acquired by the measurement device, and
the control device further executes
processing of determining the quality of the farm product based on the received light level and the determined calibration curve.

6. The quality measurement system for the farm product according to any one of claims 1 to 4, wherein
the quality is
at least one of sugar content, acidity, or pH of the farm product.

7. The quality measurement system for the farm product according to any one of claims 1 to 4, wherein
the farm product is
grapes.

8. A method for switching a calibration curve performed by a server communicating with a device for measuring quality of a farm product, the method comprising:
a step of storing a data set including a calibration curve for each planting position of the farm product;
a step of receiving position information of the measurement device; and
a step of executing processing of determining the calibration curve to be used for measurement of the quality based on the received position information of the measurement device.

9. A computer program for causing a computer to function as a server that communicates with a device for measuring quality of a farm product, the computer program causing the computer to function as:
a storage device that stores a data set including a calibration curve for each planting position of the farm product;
a communication device that receives position information of the measurement device; and
a control device that executes processing of determining the calibration curve to be used for measurement of the quality based on the received position information of the measurement device.
